# DEMANDE DE BREVET EUROPEEN

(11) **EP 4 108 517 A1**
(43) Date de publication de la demande: **28.12.2022**
(21) Numéro de dépôt: 22171698.8
(22) Date de dépôt: 04.05.2022
(51) Int. Cl.: B60N 2/16

(54) **DISPOSITIF DE RÉGLAGE D'UN SIÈGE DE VÉHICULE AUTOMOBILE**

(30) Priorité: 22.06.2021 FR 2106650
(71) Demandeur: Eurostyle Systems Tech Center France, 36000 Châteauroux (FR)
(72) Inventeur: HANTSCHOOTTE, Thierry, 36230 Montipouret (FR)
(74) Mandataire: Lefevre-Groboillot, David André

(57) **Abrégé**

Siège pour véhicule automobile comprenant un élément (200) de réglage d'une position du siège et une poignée (100) de mise en rotation de l'élément, la poignée comprenant un fourreau (120) et l'élément comprenant un bras (210) ou la poignée comprenant le bras et l'élément comprenant le fourreau, le bras étant inséré dans le fourreau suivant un sens d'insertion transversal à l'axe de rotation de l'élément, une cale d'une branche (130) du fourreau étant au contact d'une bosse (215) du bras par déformation élastique de la branche selon une rotation autour d'un axe sensiblement parallèle à l'axe de rotation de l'élément de réglage, la cale étant disposée avant la bosse suivant ledit sens d'insertion.

## Description

L'invention a trait aux dispositifs pour le réglage des sièges d'un véhicule automobile, et plus particulièrement à la fixation d'une poignée sur un mécanisme de réglage du siège.

Les sièges de véhicules automobiles comprennent généralement de nombreux mécanismes de réglage de la position du siège afin de pouvoir les ajuster au mieux à la morphologie de l'utilisateur.

Ces mécanismes peuvent être mus par des poignées actionnées par l'utilisateur.

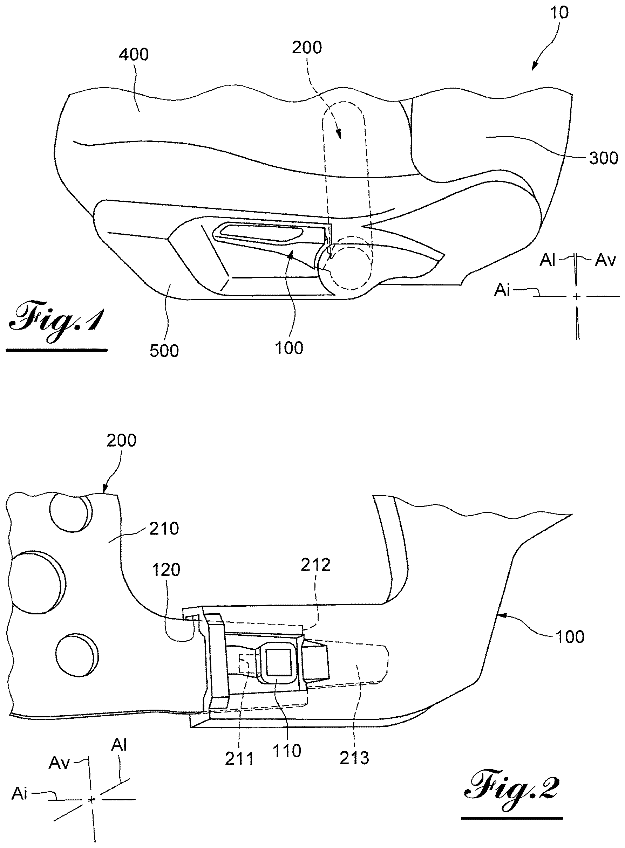

Comme illustré sur la figure 1, les poignées 100 de réglage du dossier 300 du siège 10 ou encore de rehausse de l'assise 400 sont généralement disposées en saillie d'un carter 500 latéral du siège 10. Au moins une partie de telles poignées 100 est ainsi visible par l'utilisateur et, au-delà de ses propriétés mécaniques, son esthétique est donc importante.

Comme représenté sur la figure 2, de telles poignées 100 sont, dans l'art antérieur, fixées à un bras 210 du mécanisme 200.

Afin de réduire l'encombrement et améliorer l'esthétique des poignées 100 latérales, la poignée 100 est assemblée sur le bras 210 du mécanisme 200 après assemblage du carter 500 sur le siège 10. La poignée 100 est ainsi insérée sur le bras 210 du mécanisme 200 en passant par une ouverture 510 réalisée dans le carter 500.

Afin de solidariser la poignée 100 et le mécanisme 200, la poignée 100 comprend un pion 110 inséré dans une cavité 211 du bras 210 du mécanisme 200. Le pion 110 est conçu pour s'insérer dans la cavité 211 lors de l'assemblage de la poignée 100 sur le bras 210 suivant un axe Al latéral sensiblement perpendiculaire à l'axe Ai d'insertion suivant lequel l'assemblage de la poignée 100 sur le bras 210 est réalisé afin d'empêcher le désassemblage de la poignée 100 et du bras 210.

Le bras 210 comprend également un épaulement 212 venant au contact de la poignée 100 lorsque la poignée est insérée sur le bras 210 afin de limiter, avec la coopération du pion 110 et de la cavité 211, un jeu entre la poignée 100 et le bras 210.

Cependant, un tel moyen de fixation de la poignée 100 et du bras 210 entre eux requiert une faible tolérance dans les dimensions de la poignée 100 et du bras 210 lors de la fabrication de ces deux pièces. Cette faible tolérance supprime un jeu potentiel entre ces deux pièces.

De plus, pour un désassemblage du siège 10, un tel moyen de fixation est très peu accessible car disposé derrière le carter 500, le pion 110 devant être poussé hors de la cavité 211 sensiblement perpendiculairement au carter 500.

L'objectif de l'invention est de proposer une poignée latérale de réglage d'un siège réduisant les exigences de fabrication et permettant un désassemblage plus facile de la poignée.

A cet effet, il est proposé, en premier lieu, un siège pour véhicule automobile comprenant un élément de réglage d'une position du siège et une poignée de mise en rotation de l'élément, la poignée comprenant un fourreau et l'élément comprenant un bras ou la poignée comprenant le bras et l'élément comprenant le fourreau, le bras étant inséré dans le fourreau suivant un sens d'insertion transversal à l'axe de rotation de l'élément.

Ainsi, la poignée est solidaire de l'élément de réglage permettant un réglage de la position du siège pour véhicule automobile.

Le siège comprend en outre une cale d'une branche du fourreau qui est au contact d'une bosse du bras par déformation élastique de la branche selon une rotation autour d'un axe sensiblement parallèle à l'axe de rotation de l'élément de réglage, la cale étant disposée avant la bosse suivant ledit sens d'insertion.

Une telle poignée est ainsi solidarisée à l'élément de réglage quel que soit la distance d'insertion de la poignée et du bras l'un dans l'autre. Une plus grande tolérance quant aux dimensions des pièces est donc possible par rapport à l'état de la technique tout en obtenant un assemblage limitant le jeu.

Diverses caractéristiques supplémentaires peuvent être prévues, seules ou en combinaison :
- la cale comprend des dents disposées sensiblement parallèlement à l'axe de rotation de l'élément de réglage, les dents étant au contact l'une après l'autre avec une arête de la bosse au fur et à mesure de l'insertion du bras dans le fourreau, l'arête étant disposée sensiblement parallèlement aux dents ; les dents augmentent l'accroche du bras inséré dans le fourreau ;
- la cale de la branche présente une forme générale arrondie autour d'un axe sensiblement parallèle à l'axe de rotation de l'élément, la forme de la cale augmentant la déformation de la branche au fur et à mesure de l'insertion du bras dans le fourreau ; cette forme arrondie permet ainsi d'augmenter la force de blocage du bras dans le fourreau ;
- le fourreau et le bras présentent une forme sensiblement complémentaire dont la section suivant un plan transversal à l'axe de rotation de l'élément est évasée suivant le sens opposé au sens d'insertion ; cette forme permet ainsi une plus grande facilité pour « viser » l'extrémité du bras lors de l'insertion du fourreau sur le bras ;
- la poignée faisant saillie par une ouverture d'un carter latéral du siège, la branche comprend un ergot décentré par rapport à une zone flexible de la branche, l'ergot étant disposé entre ladite zone flexible et l'ouverture du carter ; la carter permet une personnalisation de l'esthétique du siège et l'ergot permet un désassemblage de l'élément de réglage et de la poignée facilité en passant par l'ouverture du carter ;
- le fourreau comprend un creux et le bras comprend un doigt, le doigt étant configuré pour être disposé dans le creux, le doigt et le creux s'étendant suivant un axe transversal à un axe d'insertion du bras dans le fourreau ; la coopération du doigt et du creux permet de reprendre des efforts de rotation de la poignée autour de l'axe d'insertion ;
- le fourreau est fabriqué en un matériau plastique dont l'esthétique est apte à être travaillée facilement ;
- le bras est fabriqué en un matériau métallique dont la résistance est importante pour un coût réduit ;
- l'élément est solidaire d'une assise du siège et comprend un mécanisme de réglage de la hauteur de l'assise.

Il est proposé, en second lieu, un véhicule automobile comprenant un siège tel que décrit précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
[Fig. 1] - la figure 1 est une vue schématique en perspective d'une partie externe d'un siège comprenant un carter latéral et une poignée latérale de réglage ;
[Fig. 2] - La figure 2 est une vue schématique en perspective d'une partie interne du siège représentant une poignée et un mécanisme de réglage selon l'état de la technique ;
[Fig. 3] - La figure 3 est une vue schématique en plan de la partie interne du siège dans laquelle seuls le carter, la poignée et un bras d'un mécanisme de réglage du siège sont représentés selon l'invention ;
[Fig. 4] - La figure 4 est une vue schématique en plan semblable à la figure 3 agrandie sur un moyen de fixation de la poignée et du bras, le carter n'étant pas représenté et un outil disposé pour désassembler la poignée et le mécanisme étant représenté ;
[Fig. 5] - La figure 5 est une vue schématique en perspective du moyen de fixation.

La figure 1 représente une partie externe d'un siège 10, la partie externe étant visible par l'utilisateur. Le siège 10 comprend un dossier 300, une assise 400 reliée au dossier 300 et une poignée 100 de réglage du siège 10. Le siège 10 comprend également un carter 500 latéral duquel la poignée 100 fait saillie, le carter 500 cachant entre autre à l'utilisateur un mécanisme 200 de réglage du siège 10, la poignée 100 permettant d'actionner ledit mécanisme 200.

La poignée 100 est, par exemple, une poignée 100 de rehausse de l'assise 400.

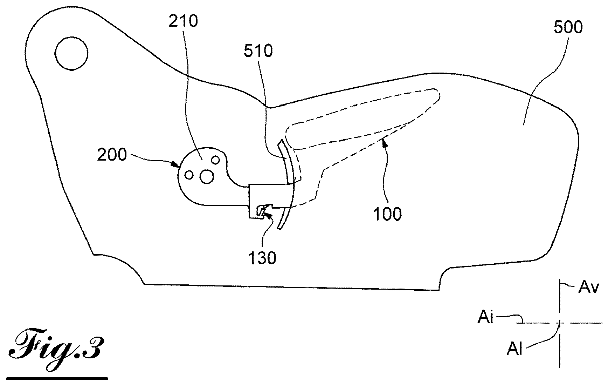

La figure 3 illustre un mode de réalisation de l'invention vu d'une partie interne du siège 10 où seuls la poignée 100, le carter 500 et un bras 210 du mécanisme 200 sont représentés. Cette partie interne n'est pas visible de l'utilisateur.

La poignée 100 fait au moins en partie saillie du carter 500 par une ouverture 510 du carter 500.

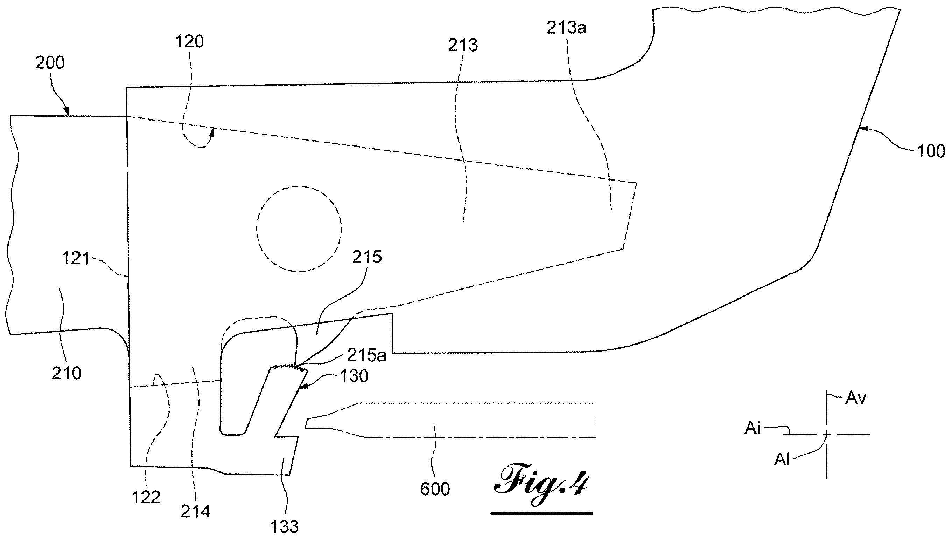

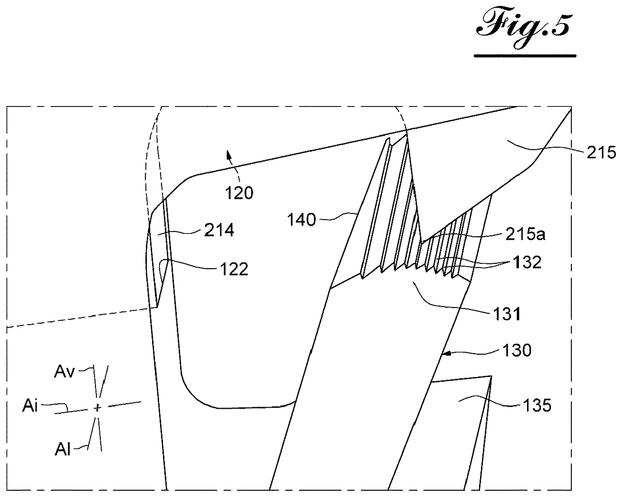

Les figures 4 et 5 sont des vues agrandies de la poignée 100 et du bras 210 du mécanisme 200 centrées sur un moyen de fixation du bras 210 et de la poignée 100 entre eux selon un mode de réalisation.

Selon le mode de réalisation représenté, la poignée 100 comprend un fourreau 120 dans lequel une extrémité 213 du bras 210 est insérée. Selon un mode de réalisation différent, le bras 210 comprend le fourreau dans lequel une extrémité de la poignée 100 est insérée.

Sur les figures sont représentés trois axes sensiblement perpendiculaires entre eux. L'un des axes est un axe Ai dit d'insertion sensiblement parallèle à un axe suivant lequel la poignée 100 et le bras 210 sont insérés l'un dans l'autre. Un autre des axes est un axe Al dit latéral sensiblement parallèle à un axe de rotation du mécanisme de réglage. Le troisième axe est un axe Av dit vertical, sensiblement perpendiculaire à l'axe Ai d'insertion et à l'axe Al latéral.

Le fourreau 120 et l'extrémité 213 présentent de préférence des formes sensiblement complémentaires. Selon le mode de réalisation représenté, le fourreau 120 et l'extrémité 213 présentent en section une forme générale triangulaire dont la pointe 213a de l'extrémité 213 est configurée pour être insérée par la base 121 du fourreau 120, la base 121 étant plus grande que la pointe 123a, afin de faciliter leur alignement lors de l'insertion de l'extrémité 213 dans le fourreau 120.

Cette forme triangulaire permet l'insertion de l'extrémité 213 dans le fourreau 120 jusqu'au contact et au blocage de l'extrémité 213 par le fourreau 120. Cette forme permet ainsi de réduire le jeu entre le bras 210 et la poignée 100 à mesure que la poignée 100 est insérée dans le fourreau 120. Cette forme permet donc d'augmenter les tolérances de fabrication de la poignée 100 et du bras 210 tout en assurant un jeu réduit voire inexistant entre la poignée 100 et le bras 210.

Selon le mode de réalisation représenté, l'extrémité 213 comprend également un doigt 214 en sailli sensiblement perpendiculairement à l'axe Ai d'insertion. Le fourreau 120 comprend un creux 122 ayant une forme complémentaire au doigt 214. La coopération du creux 122 et du doigt 214 permet ainsi à l'ensemble poignée 100 et bras 210 de mieux résister à une force de rotation qui pourrait être appliquée sur la poignée 100 lors d'un actionnement du mécanisme 200.

Selon un mode de réalisation non représenté, le fourreau 120 comprend le doigt 214 et le bras 210 comprend le creux 122.

Selon le mode de réalisation représenté, la poignée 100 comprend une branche 130 flexible comportant à un bout 131 libre des dents 132. Le bras 210 comprend un aileron 215 comportant une arête 215a configurée pour coopérer avec les dents 132 lorsque le bras 210 est inséré dans la poignée 100.

La branche 130 présente, dans le mode de réalisation représenté, une forme générale en arc-boutement. Ainsi, la souplesse et l'élasticité, sensiblement autour d'un axe perpendiculaire à l'axe Ai d'insertion, donnée à la branche 130 par son arc-boutement permet une déformation de la branche 130 lors de l'insertion de la poignée 100 et du bras 210 l'un dans l'autre.

Dans le mode de réalisation illustré, le bout 131 libre de la branche 130 est sensiblement dirigé vers l'opposé du sens d'insertion de la poignée 100 sur le bras 210. Ainsi, le bout 131 libre facilite l'insertion et s'oppose, en plus des dents 132, à une désinsertion de la poignée 100 et du bras 210 l'un de l'autre.

Selon un mode de réalisation non représenté, la poignée 100 comprend l'aileron 215 et le bras 210 comprend la branche 130.

Selon le mode de réalisation représenté, le bout 131 de la branche 130 sur lequel sont formées les dents 132 présente une forme sensiblement arrondie autour d'un axe sensiblement parallèle à l'axe Al latéral.

Selon le mode de réalisation représenté, l'arête 215a de l'aileron 215 et les dents 132 de la branche 130 s'étendent suivant une direction sensiblement transversale à l'axe Ai d'insertion. Ainsi, la coopération d'au moins une des dents 132 avec l'arête 215a s'oppose à une désinsertion de la poignée 100 et du bras 210 l'un de l'autre.

Les dents 132 sont disposées les unes derrière les autres suivant l'axe Ai d'insertion.

Ainsi, lors de la fixation de la poignée 100 sur la branche 130, l'arête 215a de l'aileron 215 vient dans un premier temps au contact d'une des dents 132. L'arête 215a pousse ensuite la branche 130 en rotation sensiblement autour de l'axe Al latéral de sorte que la branche 130 s'écarte de l'arête 215a et que l'arête 215a coopère par élasticité de la branche 130 avec la dent 132 suivante. Ces étapes se répètent jusqu'à ce que la forme triangulaire du bras 210 bloque l'insertion du bras 210 dans le fourreau 120.

La coopération de la branche 130 et de l'aileron 215 permet ainsi avec la forme du bras 210 et du fourreau 120 de bloquer la poignée 100 et le bras 210 l'un par rapport à l'autre même avec des exigences de dimensionnement réduites lors de la fabrication de ces pièces.

Selon le mode de réalisation représenté, la forme arrondie du bout 131 libre de la branche 130 agrandie sa longueur suivant le sens opposé au sens d'insertion de la poignée 100 sur le bras 210 de sorte à augmenter la déformation du bras 210 au fur et à mesure de l'insertion de la poignée 100 sur le bras 210. Ainsi, plus le bras 210 est inséré dans le fourreau 120 de la poignée 100, plus la force de solidarisation du bras 210 et de la poignée 100 est importante.

Selon un mode de réalisation non représenté, la branche 130 ne comprend pas de dent 132 et la forme arrondie du bout 131 de la branche 130 suffit pour maintenir solidaires le bras 210 et la poignée 100.

Le doigt 214 et le creux 122 ainsi que la branche 130 et l'aileron 215 sont, selon le mode de réalisation représenté, disposés sensiblement dans le plan du triangle formé par une section du bras 210 de sorte à réduire l'encombrement latéral.

Selon un mode de réalisation, la poignée 100 est fabriquée en un matériau plastique. La poignée 100 comprend des dépouilles 140 pour faciliter un démoulage.

Selon un mode de réalisation, le bras 210 est fabriqué en un matériau métallique.

Comme représenté en particulier sur la figure 4, selon le mode de réalisation illustré, la branche 130 comprend un ergot 133 décentré par rapport à l'axe autour duquel la branche 130 se déforme. L'ergot 133 est disposé vers l'ouverture 510 du carter 500 par laquelle la poignée 100 est insérée. L'ergot 133 est conçu pour permettre de déformer la branche 130 une fois que la poignée 100 et le bras 210 sont solidaires en éloignant le bout 131 libre de la branche 130 de l'aileron 215. L'ergot 133 permet ainsi de supprimer la coopération entre les dents 132 de la branche 130 et l'arête 215a de l'aileron 215 afin de permettre un désassemblage de la poignée 100 et du bras 210. L'ergot 133 est par exemple mu par le biais d'un outil 600 traversant l'ouverture 510 du carter 500 afin de permettre un désassemblage facile du siège 10.

La conception de la poignée 100 et du bras 210 du mécanisme 200 tels que décrits permettent la fabrication de pièces avec des contraintes réduites par rapport à l'art antérieur sans réduire la qualité de l'assemblage.

Cette conception permet également un désassemblage facile et rapide du siège 10 tout en préservant l'esthétique du siège 10 et en limitant son encombrement latéral.

## Revendications

1. Siège (10) pour véhicule automobile comprenant un élément (200) de réglage d'une position du siège (10) et une poignée (100) de mise en rotation de l'élément (200), la poignée (100) comprenant un fourreau (120) et l'élément (200) comprenant un bras (210) ou la poignée (100) comprenant le bras (210) et l'élément (200) comprenant le fourreau (120), le bras (210) étant inséré dans le fourreau (120) suivant un sens d'insertion transversal à l'axe de rotation de l'élément (200), le siège (10) étant caractérisé en qu'une cale (131) d'une branche (130) du fourreau (120) est au contact d'une bosse (215) du bras (210) par déformation élastique de la branche (130) selon une rotation autour d'un axe sensiblement parallèle à l'axe de rotation de l'élément (200) de réglage, la cale (131) étant disposée avant la bosse (215) suivant ledit sens d'insertion.

2. Siège (10) de véhicule automobile selon la revendication précédente, caractérisé en que la cale (131) comprend des dents (132) disposées sensiblement parallèlement à l'axe de rotation de l'élément (200) de réglage, les dents (132) étant au contact l'une après l'autre avec une arête (215a) de la bosse (215) au fur et à mesure de l'insertion du bras (210) dans le fourreau (120), l'arête (215a) étant disposée sensiblement parallèlement aux dents (132).

3. Siège (10) de véhicule automobile selon l'une quelconque des revendications précédentes, caractérisé en que la cale (131) de la branche (130) présente une forme générale arrondie autour d'un axe sensiblement parallèle à l'axe de rotation de l'élément (200), la forme de la cale (131) augmentant la déformation de la branche (130) au fur et à mesure de l'insertion du bras (210) dans le fourreau (120).

4. Siège (10) de véhicule automobile selon l'une quelconque des revendications précédentes, caractérisé en que le fourreau (120) et le bras (210) présentent une forme sensiblement complémentaire dont la section suivant un plan transversal à l'axe de rotation de l'élément (200) est évasée suivant le sens opposé au sens d'insertion.

5. Siège (10) de véhicule automobile selon l'une quelconque des revendications précédentes, caractérisé en que, la poignée (100) faisant saillie par une ouverture (510) d'un carter (500) latéral du siège (10), la branche (130) comprend un ergot (133) décentré par rapport à une zone flexible de la branche (130), l'ergot (133) étant disposé entre ladite zone flexible et l'ouverture (510) du carter (500).

6. Siège (10) de véhicule automobile selon l'une quelconque des revendications précédentes, caractérisé en que le fourreau (120) comprend un creux (122) et le bras (210) comprend un doigt (214), le doigt (214) étant configuré pour être disposé dans le creux (122), le doigt (214) et le creux (122) s'étendant suivant un axe transversal à un axe (Ai) d'insertion du bras (210) dans le fourreau (120).

7. Siège (10) de véhicule automobile selon l'une quelconque des revendications précédentes, caractérisé en que le fourreau (120) est fabriqué en un matériau plastique.

8. Siège (10) de véhicule automobile selon l'une quelconque des revendications précédentes, caractérisé en que le bras (210) est fabriqué en un matériau métallique.

9. Siège (10) de véhicule automobile selon l'une quelconque des revendications précédentes, caractérisé en que l'élément (200) est solidaire d'une assise (400) du siège (10) et comprend un mécanisme de réglage de la hauteur de l'assise (400).

10. Véhicule automobile comprenant un siège (10) selon l'une quelconque des revendications précédentes.
